# EUROPEAN PATENT SPECIFICATION

(11) **EP 3 268 787 B1**
(45) Date of publication and mention of the grant of the patent: **13.11.2019**
(21) Application number: 16711945.2
(22) Date of filing: 10.03.2016
(51) Int. Cl.: G02B 6/38, G02B 6/42

(54) **CABLE CONNECTOR RETENTION DESIGN**
KABELVERBINDERRÜCKHALTEDESIGN
CONCEPTION DE RETENUE DE CONNECTEUR DE CÂBLE

(30) Priority: 10.03.2015 US 201514643928
(43) Date of publication of application: 17.01.2018
(73) Proprietor: Finisar Corporation, Sunnyvale, CA 94089 (US)
(72) Inventor: ZHANG, Ranran, Sunnyvale, CA 94089 (US); SHI, Shamei, Sunnyvale, CA 94089 (US); WANG, William, H., Sunnyvale, CA 94089 (US)
(74) Representative: Gill Jennings & Every LLP
(86) International application number: PCT/US2016/021862
(87) International publication number: WO 2016/145248

(56) References cited:
- US-A1- 2011 081 114
- US-A1- 2011 081 119
- US-A1- 2012 027 359

## Description

### FIELD

Embodiments disclosed herein relate to optical components. In particular, some embodiments described herein relate to cable connectors that may be used with optoelectronic modules and a means for connecting and attaching cable connectors to optical modules.

### BACKGROUND

Fiber-optic transmission media are increasingly used for transmitting optical, voice, and data signals. As a transmission vehicle, light provides a number of advantages over traditional electrical communication techniques. For example, optical signals enable extremely high transmission rates and very high bandwidth capabilities. Also, optical signals are unaffected by electromagnetic radiation that causes electromagnetic interference ("EMI") in electrical signals. Optical signals also provide a more secure signal because the optical transmission medium, such as an optical fiber, does not allow portions of the signal to escape, or be tapped, from the optical fiber, as can occur with electrical signals in wire-based transmission systems. Optical signals can also be transmitted over relatively greater distances without experiencing the signal loss typically associated with transmission of electrical signals over such distances.

While optical communications provide a number of advantages, the use of light as a data transmission vehicle presents a number of implementation challenges. For example, prior to being received and/or processed, the data represented by the optical signal must be converted to an electrical form. Similarly, the data signal must be converted from an electronic form to an optical form prior to transmission onto the optical network.

These conversion processes may be implemented by optical transceiver modules located at either end of an optical fiber. A typical optical transceiver module contains a laser transmitter circuit capable of converting electrical signals to optical signals, and an optical receiver capable of converting received optical signals into electrical signals. The optical transceiver module may be electrically interfaced with a host device, such as a host computer, switching hub, network router, switch box, or computer I/O, via a compatible connection port.

One example of a connection port and compatible connector that is currently used in the art is a plug-and-play multi-fiber push-on (MPO) receptacle, which enables a multi-fiber cable, such as a 4-fiber, 12-fiber, or 24-fiber cable including Quad (4-channel) Small Form-factor Pluggable (QSFP), CXP, CDFP, CFP2, and CFP4 active optical cable, to connect to the optical network and accelerate bandwidth and traffic speeds. Currently, such systems are used to support multiple-dwelling unit (MDU) applications and core network applications, including central offices, switching centers, data centers, radio network controllers, base station controllers and cell sites.

One difficulty with the existing active optical cable products is that while they have generally been designed to be easily plugged in and out of the corresponding receptacle, it is difficult to permanently attach and connect the cables to the transceiver modules. Without the ability to permanently attach and connect the cables, it is difficult to provide products where the transceiver module and active optical cable products are sold as an assembled or coupled unit without increasing the manufacturing process or greatly increasing inventory on the existing modules and cables.

US 2011/0081119 A1 discloses a parallel cable with a connector comprising a connector housing, a ferrule and a crimp ring configured to secure the connector to a multi-fiber communication cable.

The subject matter claimed herein is not limited to embodiments that solve any disadvantages or that operate only in environments such as those described above. Rather, this background is only provided to illustrate one exemplary technology area where some embodiments described herein may be practiced.

### SUMMARY

According to the invention there is provided an active optical cable according to the appended claims.

The object and advantages of the embodiments will be realized and achieved at least by the elements, features, and combinations particularly pointed out in the claims.

It is to be understood that both the foregoing general description and the following detailed description are exemplary and explanatory and are not restrictive of the invention, as claimed.

### BRIEF DESCRIPTION OF THE DRAWINGS

Example embodiments will be described and explained with additional specificity and detail through the use of the accompanying drawings in which:
Figure 1 is an isometric view of an example of the cable retention design as an example of a first embodiment;
Figure 2 is an exploded isometric view of the cable retention design of the first embodiment shown in Figure 1;
Figures 3A-3B are isometric cross-sectional views of the example optoelectronic module and a cable including the pluggable connector which illustrate the locking mechanism and cable retention design of the first embodiment shown in Figure 1;
Figures 4A-4D are cross-sectional views of the example optoelectronic module and a cable including the pluggable connector which illustrate the locking mechanism and cable retention design of the first embodiment shown in Figure 1;
Figures 5A-5B are isometric views of an active optical cable product currently known in the art.

### DESCRIPTION OF SOME EXAMPLE EMBODIMENTS

Particular embodiments of the present disclosure will be described with reference to the accompanying drawings. The illustrative embodiments described in the detailed description, drawings, and claims are not meant to be limiting. Other embodiments may be utilized, and other changes may be made, without departing from the spirit or scope of the subject matter presented herein. The aspects of the present disclosure, as generally described herein, and illustrated in the Figures, can be arranged, substituted, combined, separated, and designed in a wide variety of configurations, all of which are explicitly contemplated herein.

Embodiments disclosed herein relate to optical components. More particularly, some example embodiments relate to a cable connector for an optoelectronic module, cable locking mechanism, and cable retention design which provide a simpler and more reliable way to permanently connect and attach cables to optoelectronic modules. The embodiments described herein provide various benefits including the ability to simplify manufacturing processes, reduce inventory on modules and cables, and permanently and securely connect cables to optoelectronic modules. Further, embodiments herein are capable of being applied to existing active optical cable products without requiring a complicated redesign of the current products.

An example embodiment includes a cable connector that may be plugged into an optoelectronic module permanently so as to maintain engagement of the multi-fiber cable to an optical engine. In instances where the cable connector is used on both ends of a multi-lane fiber optical cable, an active optical product may be provided that has a transceiver module permanently attached to each end of the optical cable. Embodiments herein differ from products currently used in the art which can be unplugged once they are plugged into a transceiver module or optoelectronic module.

Although the embodiments are described in the context of optical transceiver modules and active optic cables used in the field of optical networking, it will be appreciated that embodiments of the invention may be employed in other fields and/or operating environments where the functionality disclosed herein may be useful. Accordingly, the scope of the invention should not be construed to be limited to the exemplary implementations and operating environments disclosed herein.

Embodiments of the present disclosure will now be explained with reference to the accompanying figures.

### I. Exemplary Aspects of Existing Active Optical Cables

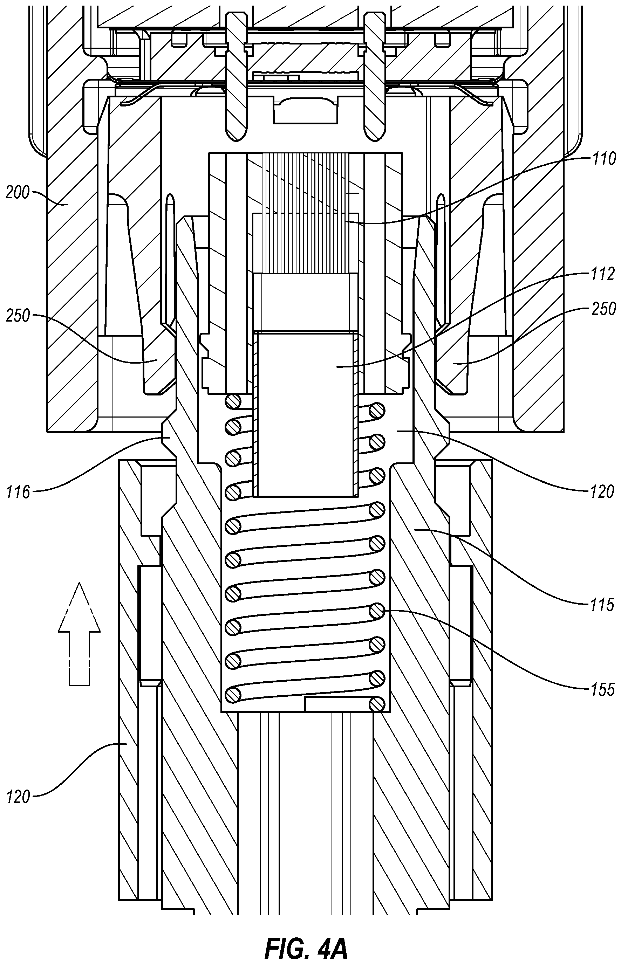

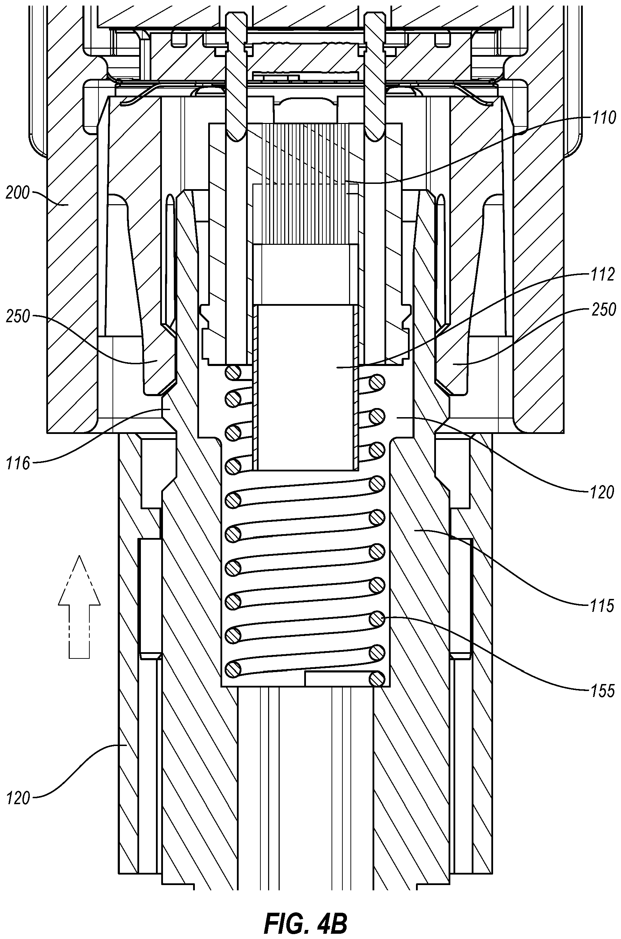

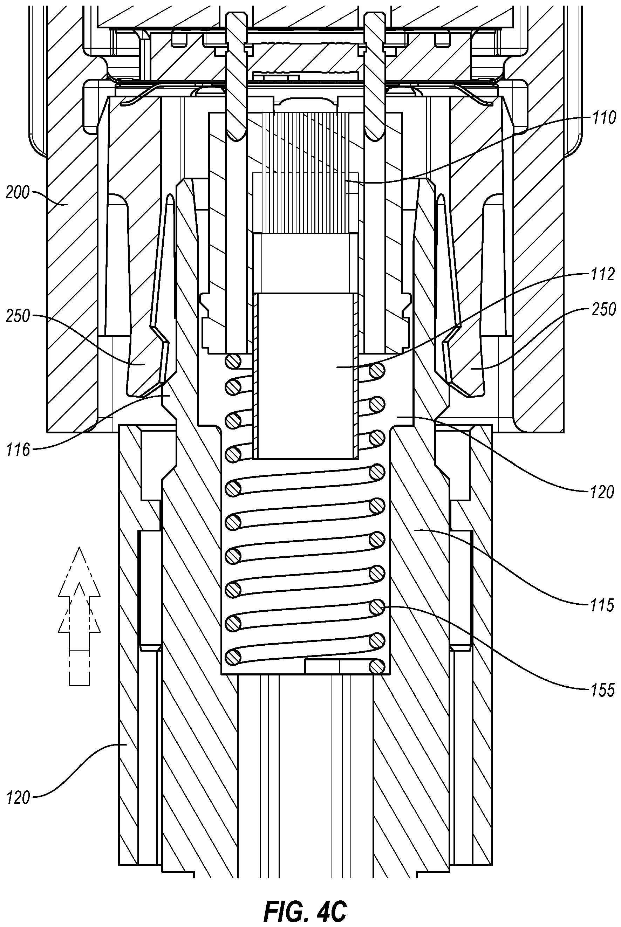

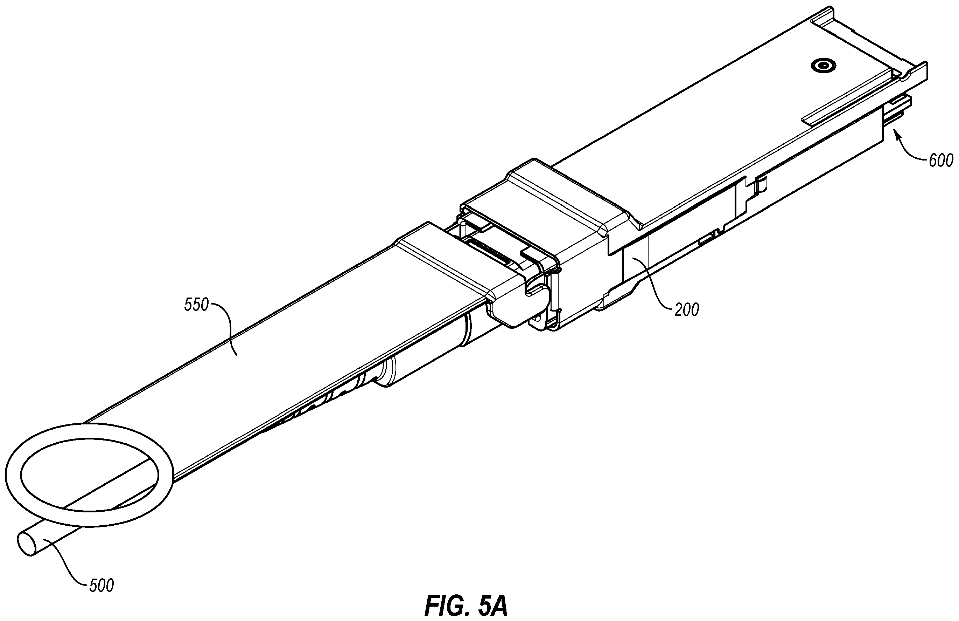

Figures 5A-5B are isometric views of existing QSFP active optical cable 500 connected to a QSFP transceiver module, which is an example of an optoelectronic module 200. In this example, the optoelectronic module 200 is hot-pluggable, or is designed to be plugged into a larger electronic system such as a host printed circuit board (PCB) of a network switch or the like. One difficulty with this system, however, is that the handle or bailing mechanism 550 of the optoelectronic module 200 which enables the optoelectronic module 200 to be removed from the larger electronic system may interfere with the active optical cable 500, potentially causing the active optical cable 500 to be disconnected or improperly connected to the optoelectronic module 200. In order to alleviate this problem, the embodiments shown in Figures 4A-4D provide a means for permanently connecting an active optical cable to the optoelectronic module 200.

### II. Exemplary Structural Aspects of Existing Active Optical Cables

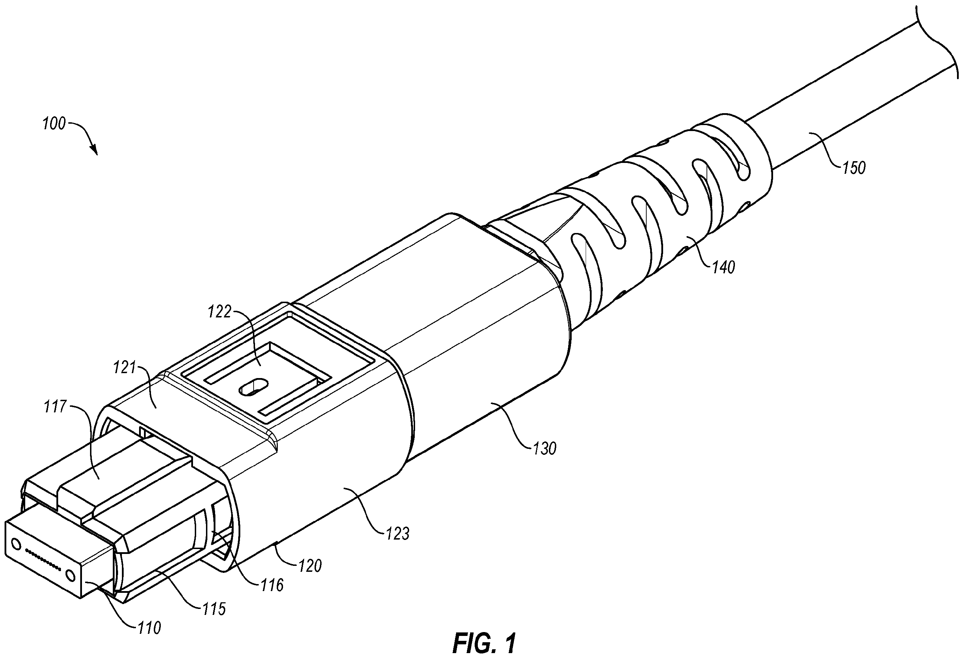

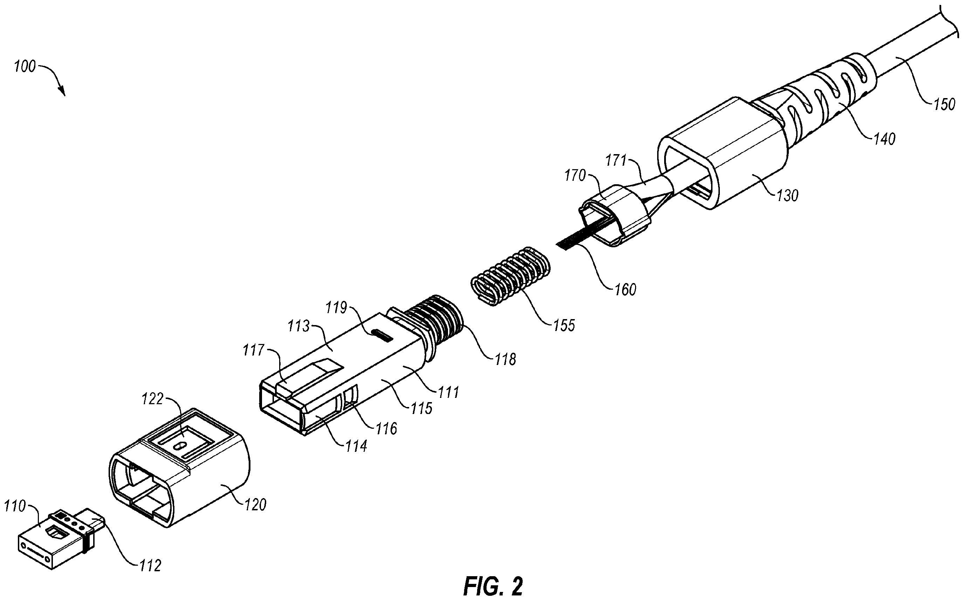

Reference is first made to Figs. 1 and 2, which illustrate an example of an active optical cable 100 according to one embodiment. Specifically, Fig. 1 is an isometric view of the active optical cable 100 which may be permanently connected to the optoelectronic module 200. Figure 2 is an exploded isometric view of the active optical cable 100 of Figure 1.

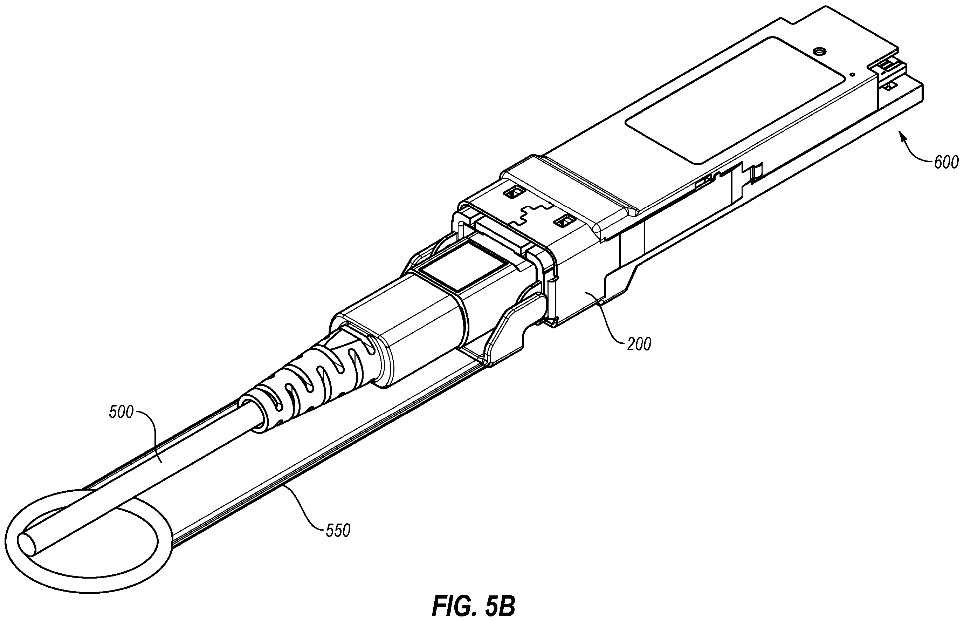

The optoelectronic module 200 depicted in Figs. 5A and 5B includes an optical transmitter and an optical receiver. An example of the optoelectronic module 200 may be designed for high-speed (e.g., 25 gigabits per second (G) or higher) optical interconnects between integrated circuits and/or between circuit boards. Additionally or alternatively, the optoelectronic module 200 may be configured to receive four, twelve, twenty-four, or other quantities of optical channels, each of which may be configured to communicate data.

Once mounted to a host PCB (not shown), the optoelectronic module 200 may be configured to communicate data between the host device and a network (not shown), for example. The optoelectronic module 200 may convert electrical signals to optical signals representing the electrical signals and vice versa. For example, data in the form of optical signals may be communicated from a network along the active optical cable 100 to the optoelectronic module 200. Components (examples of which are described below) of the optoelectronic module 200 may convert the optical signals to electrical signals representative of the optical signals. The electrical signals may then be communicated to the host device. Likewise, the host device may communicate electrical signals to the optoelectronic module 200. The optoelectronic module 200 may convert the electrical signals to optical signals representative of the electrical signals. The optical signals may be communicated along the active optical cables 100 into the network to, e.g., another optoelectronic module 200.

The active optical cable 100 includes an MT ferrule 110 and a ferrule boot 112. The ferrule boot 112 connects to a plurality of optical ribbon fibers 160 which extend through the active optical cable 100. The ferrule boot 112 portion of the MT ferrule 110 is housed in the crimp ring base 115. A sleeve 120 extends over the crimp ring base 115. The crimp ring base 115 houses a spring 155 which is configured to encircle the optical ribbon fibers 160. A crimp ring 170 is configured to apply a compressive force to a crimping portion 118 of the crimp ring base 115. The crimp ring 170 also includes a cable jacket portion 171. A cable boot 130 is configured to enclose the crimp ring 170 and cable jacket 171 and the optical ribbon fiber 160 disclosed therein. A terminal end of the cable boot 130 comprises a transition portion 140 which is connected to a protective tube 150 which encloses the optical ribbon fibers 160.

As may be understood by one skilled in the art, the optical ribbon fibers 160 may be individually coated with plastic layers within the protective tube 150 and within the various other components of the active optical cable 100 including the MT ferrule 110, sleeve 120, crimp ring base 115, crimp ring 170, cable jacket 171, and cable boot 130. Further, the plastic layers and the protective tube 150 are made of materials which are suitable for the environment where the active optical cable 100 will be deployed and the embodiments described herein are not limited to any particular materials.

Attention will now be turned to the structural components of the sleeve 120 and crimp ring base 115 which provide the means for permanently locking or fixing the active optical cable 100 to the optoelectronic module 200. The crimp ring base 115 includes a tab portion 117 in a top surface thereof which facilitates connection with the optoelectronic module 200. More specifically, the tab portion 117 is configured to be received by a correspondingly shaped receiving portion (not shown) of the optoelectronic module 200. The tab portion 117 forms a raised plane with two inclined portions formed at the terminal and distal ends thereof. As may be understood by one of skill in the art, the inclined portions facilitate in the removal and insertion of the tab portion 117 and crimp ring base 115 into the receiving portion of the optoelectronic module 200.

Both side surfaces 111 of the crimp ring base 115 have a planar recessed portion 114 formed therein. The planar recessed portions 114 each have an optoelectronic locking tab 116 formed therein such that the surface of the optoelectronic locking tab 116 of this example is configured so as to be coplanar or substantially coplanar with the side surfaces 111 of the crimp ring base. Hence, the optoelectronic locking tab 116 may be viewed as a partition between two separate components of the planar recessed portions 114 formed in each side surface 111 of the crimp ring base 115. As will be described more fully below, the optoelectronic locking tab 116 provides the means for securely locking the active optical cable 100 to the optoelectronic module 200.

The crimp ring base 115 also includes a sleeve locking portion 119 formed in an upper surface 113 thereof which is used as described below to lock the sleeve 120 to the crimp ring base 115. More specifically and is described more fully below, the sleeve locking portion 119 provides a mechanism for simultaneously locking the sleeve 120 to the crimp ring base 115 and the crimp ring base 115 to a corresponding mechanism of the optoelectronic module 200 in order to permanently connect the entire active optical cable 100 to the optoelectronic module 200.

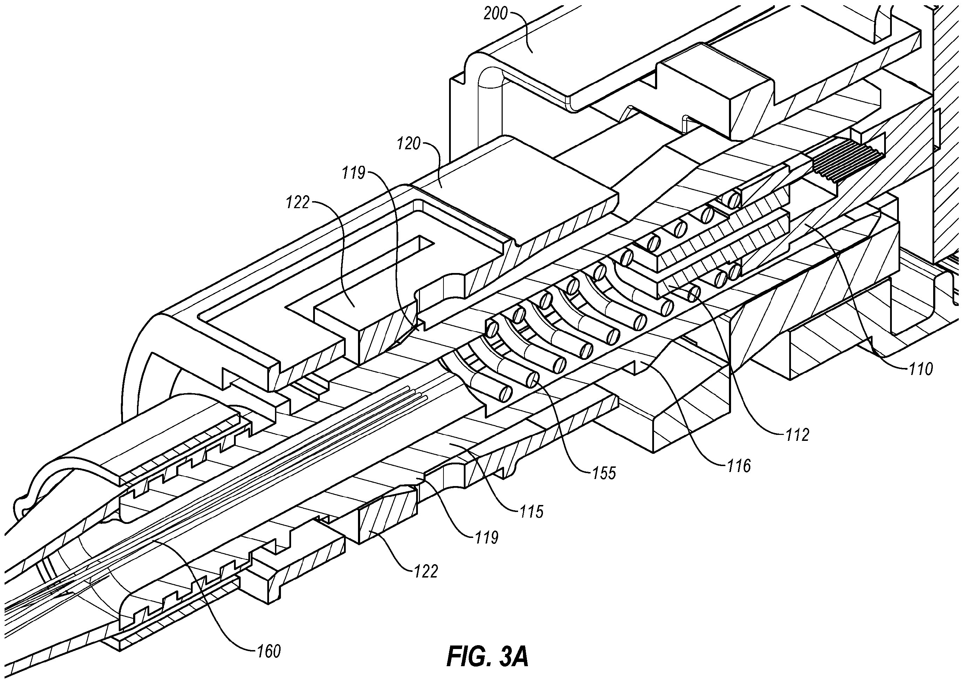

In this example, the sleeve locking portion 119 comprises an angled tooth or projection formed in the upper surface 113 of the crimp ring base 115. The angled tooth configuration of the sleeve locking portion 119 includes an inclined portion which forms an angled surface which gradually extends above the upper surface 113 of the crimp ring base 115 to a flat upper surface and an engaging wall which connects the flat upper surface of the sleeve locking portion 119 to the upper surface 113 of the crimp ring base 115 at a substantially 90 degree angle. As may be understood by one of skill in the art, this shape facilitates in the sliding motion of the sleeve 120 with respect to the crimp ring base 115 in the positive y-direction shown in Figure 2. At the same time, the 90 degree angle of the engaging wall without a corresponding inclined portion prevents movement in the negative y-direction once the engaging portion 122 of the sleeve 120 is engaged thereon, as is described more fully below. Furthermore, another sleeve locking portion 119 may be formed on the bottom surface as is shown in Figures 3A-3B.

Attention will now be turned to describing the sleeve 120. The sleeve 120 comprises a substantially flat sided oval tube, with a flat upper and lower surface 121 and curved side surfaces 123. As was previously described, the inner circumference of the sleeve 120 is formed so as to house the crimp ring base 115 with the spring 155, MT ferrule 110 and optical ribbon fibers 160 housed therein. As is seen in Figure 1, a portion of the crimp ring base 115 extends beyond a proximal portion of the sleeve 120 so as to be received and enclosed in a corresponding receiving port of the optoelectronic module 200.

A flat upper surface 121 of the sleeve includes an engaging portion 122 which comprises a resilient tab that extends parallel to the flat upper surface 121 of the sleeve 120 and is configured to interact with the sleeve locking portion 119 of the crimp ring base 115 as is described more fully below. As is shown in Figures 3A-3B, the sleeve 120 may include a similar engaging portion 122 on a bottom surface of the sleeve 120.

As may be understood by one of ordinary skill in the art, the crimp ring base 115 may include a variety of differently shaped optoelectronic locking tabs 116 and sleeve locking portions 119 without departing from the meaning and scope of the invention. Further, the sleeve 120 may include a variety of differently shaped engaging portions 122 in addition or as an alternative to the resilient tab described and illustrated herein. The examples of locking or engaging features described herein are included merely as examples which may be used in association with the claimed invention. Any other structural arrangements that are effective in providing functionality comparable to that implemented by the above embodiment may alternatively be employed. For example, although the embodiments described herein provide the locking components 119 and 122 in both the upper and lower surfaces of the crimp ring base 115 and the sleeve 120 respectively, these elements may only be included in either the upper or lower surfaces of the respective components.

### III. Exemplary Operational Aspects of the Embodiments

Figures 3A-3B and 4A-4D are cross-sectional views of the active optic cable 100 of the present invention which illustrate the locking components thereof. As is shown in Figure 3A, as the proximal end of the active optical cable 100 is inserted into the port of the optoelectronic module 200 in the +y direction or cable insertion direction, the linear movement continues until the MT ferrule 110 engages with a corresponding receiver of the optoelectronic module 200. Once the MT ferrule 110 engages with the receiver of the optoelectronic module 200, and the moving force is continually applied to the sleeve 120, the sleeve 120 is caused to move in the cable insertion direction with respect to the crimp ring base 115.

As the sleeve 120 moves in the cable insertion direction with respect to the crimp ring base 115, the resilient tab of the engaging portions 122 of the sleeve 120 is urged away from the crimp ring base 115 by the resistive force which is generated as the moving force applied to the active optical cable 100 is transferred to the +z direction by the angled portion on an interior surface of the engaging portions 122 sliding along the inclined surface of the sleeve locking portions 119 formed on the upper and lower surfaces of the crimp ring base 115.

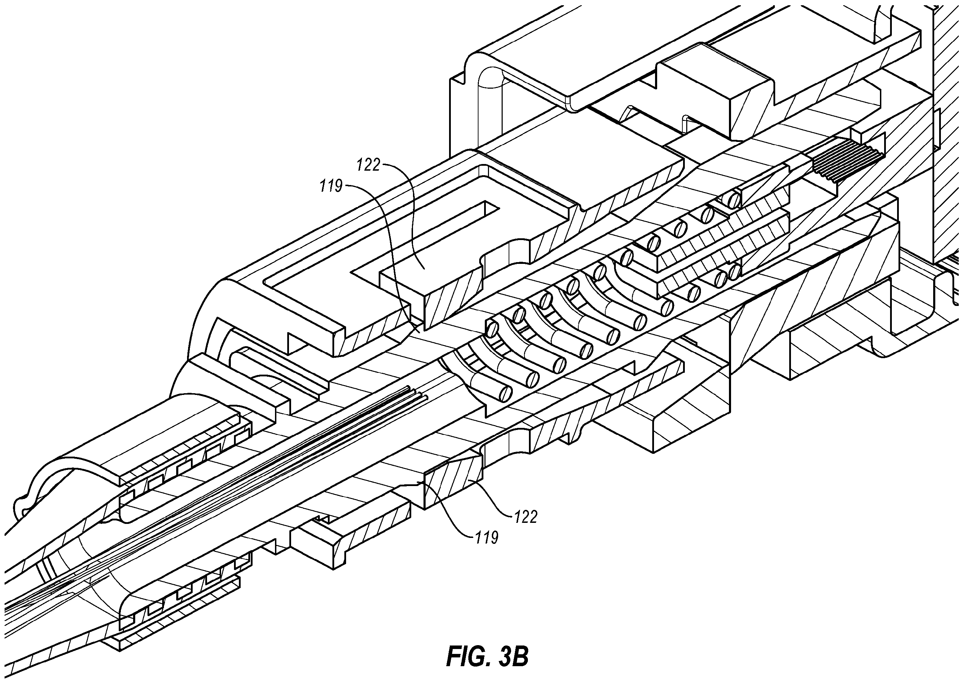

Once the sleeve 120 is moved far enough in the cable insertion direction with respect to the crimp ring base 115 so that the engaging portions 122 of the sleeve 120 no longer engage with the sleeve locking portions 119 of the crimp ring base 115 but with the upper and lower surfaces thereof, the assembly is in locked position as is shown in Figure 3B. As is shown in Figure 3B, because the sleeve locking portions 119 have the engaging wall described above, when a force is applied in the -y direction or in a cable removal direction, the urging force of the resilient tab in the z direction is not easily overcome and as such, the sleeve 120 is locked into position.

Figures 4A-4D illustrate the mechanism for locking the active optical cable 100 to the optoelectronic module 200. More specifically, Figures 4A-4D are cross-sectional views of the active optical cable 100 as it engages with the optoelectronic module 200. It is to be noted that the engagement between the optoelectronic locking tabs 116 of the crimp ring base 115 and the arms 250 of the optoelectronic module 200 occurs prior or simultaneously as the engagement between the sleeve locking portion 119 for the crimp ring base 115 and the engaging portion of the sleeve 120.

More particularly, the engagement between the active optical cable 100 and the optoelectronic module 200 occurs as the cable insertion force is applied to the active optical cable 100 in the cable insertion direction. As is shown in Figures 4A-4C, as the force is applied, the planar recessed portions 114 of the active optical cable 100 enclose the arms 250 of the optoelectronic module 200 and enable the active optical cable 100 to engagedly slide with respect to the optoelectronic module 200. As is shown in Figures 4A-4C, as the cable insertion force continues, the optoelectronic locking tabs 116 engage with the arms 250 of the optoelectronic module 200 and inclined portions of the optoelectronic locking tabs 116 and/or the arms 250 of the optoelectronic module transfer the force in the cable insertion direction into an expansion force in the x direction which causes the arms 250 to be urged away from the optoelectronic locking tabs 116.

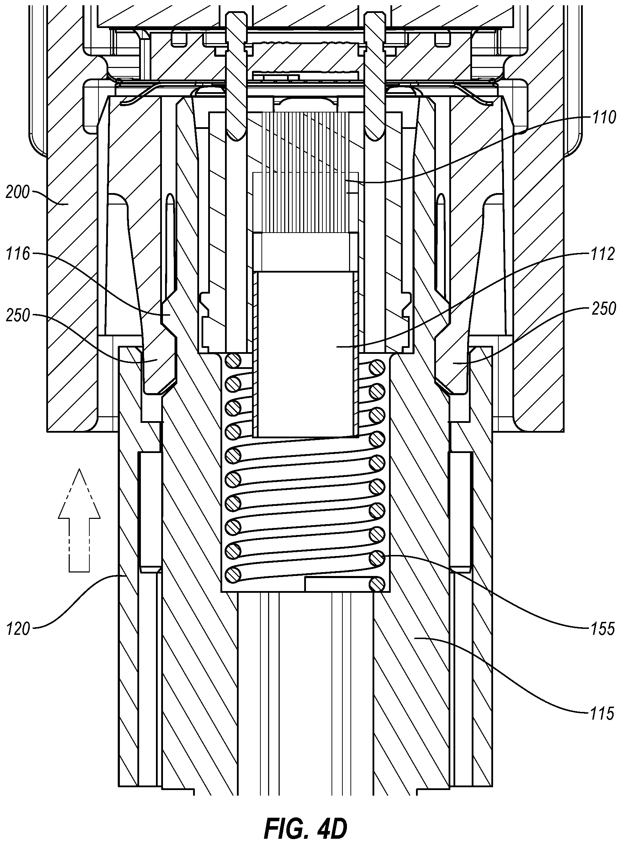

At the period shown in Figure 4D, after the cable insertion force continues, the arms 250 of the optoelectronic module 200 have passed and gone beyond the optoelectronic locking tabs 116 and can no longer back out because the arms 250 are confined inside the sleeve 120. At this time, the sleeve locking portions 119 of the crimp ring base 115 engage with the engaging portions 122 of the sleeve 120 so as to lock the sleeve 120 in place with the sleeve 120 holding the arms 250 in the engaged or locked position within the planar recessed portions 114.

As may be understood, embodiments herein provide a simple and efficient locking mechanism without requiring additional components such as screws or other fixing means. As such, embodiments herein provide an efficient and simple way to reliably connect and attach the active optical cable 100 to the optoelectronic module 200.

As may be understood by one of ordinary skill in the art, the present invention may be embodied in other specific forms. In another embodiment of the invention, the locking features may be disposed on the ferrule boot 112 and the crimp ring 170 with a compressive spring 155 being disposed there between.

The described embodiments are to be considered in all respects only as illustrative and not restrictive. The scope of the invention is, therefore, indicated by the appended claims rather than by the foregoing description.

## Claims

1. An active optical cable and optoelectronic module comprising:
an optoelectronic module (200) comprising:
a body defining a port of the optoelectronic module;
two arms (250) positioned inside of the port; and
an optical interface; and
an active optical cable (100) comprising:
a crimp ring base (115) comprising:
an angled projection (119) positioned on a first surface (113) of the crimp ring base (115);
two planar recessed portions (114) positioned on both side surfaces (111) of the crimp ring base (115); and
at least one locking tab (116) positioned on the each side surface (111) of the crimp ring base (115);
a plurality of optical fibers (160) positioned inside the crimp ring base (115) and optically coupled to the optical interface; and
a sleeve (120) that surrounds the crimp ring base (115), the sleeve including a resilient tab (122),
wherein:
the optoelectronic module (200) is configurable to be locked in a locked position relative to the optical cable (100); and
in the locked position:
the locking tabs (116) are positioned farther into the port than the arms (250) such that the arms are positioned in the planar recessed portions (114);
the sleeve (120) is in a position relative to the port such that a portion of the sleeve (120) confines the arms (250) in the planar recessed portions (114); and
the angled projection (119) is engaged with the resilient tab (122) to lock the sleeve (120) in the position in which the sleeve (120) confines the arms in the planar recessed portions (114).

2. The active optical cable of claim 1, wherein:
the optical cable (100) is configured to transition from an unlocked position relative to the optoelectronic module (200) to the locked position; and
during the transition from the unlocked position to the locked position, the locking tabs (116) engages the arms (250) prior to or simultaneously with the engagement between the angled projection (119) and the resilient tab (122).

3. The active optical cable of any of the preceding claims, wherein the portion of the sleeve (120) that confines the arms (250) provides an urging force that confines the arms (250) in the recessed portions (114).

4. The active optical cable of any of the preceding claims, wherein:
the angled projection (119) comprises:
an angled surface that extends at an angle with respect to the first surface (113) of the crimp ring base (115); and
an engaging wall that extends at an angle substantially 90 degrees with respect to the first surface (113);
the resilient tab (122) comprises a sloped surface and a flat surface;
the optical cable (100) is configured to transition from an unlocked position relative to the optoelectronic module (200) to the locked position; and
in the transition position from the unlocked position to the locked position:
the angled surface contacts the sloped surface to displace the resilient tab relative to the first surface in a first direction, and
in the locked position, the engaging wall is positioned farther from the port than the flat surface such that the flat surface prevents the sleeve from sliding in a second direction perpendicular to the first direction.

5. The active optical cable of any of the preceding claims, wherein:
the crimp ring base (115) further comprises a tab portion (117) positioned on the top surface (113) of the crimp ring base;
the tab portion (117) comprises two inclined portions with a raised surface positioned therebetween;
the raised surface is raised with respect to the top surface (113) of the crimp ring base (115);
the optoelectronic module (200) defines a single receiving portion in an internal surface of the port;
the sleeve (120) further defines an inner circumference to enable the sleeve to translate relative to the crimp ring base in the positive first direction; and
the tab portion (117) is shaped to be positioned in the receiving portion of the optoelectronic module (200) when the optical cable (100) is in the locked position.

6. The active optical cable of any of the preceding claims, wherein an inner circumference of the sleeve (120) is sized and shaped to house the crimp ring base (115) and the optical fibers (160) therein.

7. The active optical cable of any of the preceding claims, wherein the optical cable (100) is configured to transition from an unlocked position relative to the optoelectronic module (200) to the locked position and to not transition from the locked position to the unlocked position.

8. The active optical cable of claim 7, wherein:
each locking tab (116) forms a partition between two separate planar recessed portions (114) formed in the side surface (111) of the crimp ring base (115);
the partition includes an angled surface; and
during the transition from the unlocked position to the locked position, the angled surface displaces the arms (250) relative to the side surface (111) as the crimp ring base (115) is introduced into the port of the optoelectronic module (200).

9. 10. The active optical cable of any of the preceding claims, further comprising an MT ferrule (110) housed in the crimp ring base (115).

10. The active optical cable of any of the preceding claims, wherein:
the sleeve (120) is at least partially positioned inside of the port of the optoelectronic module (200).

11. The active optical cable of claim 10, wherein the two locking tabs (116) of the crimp ring base (115) engage the arms (250) of the optoelectronic module (200) prior to or simultaneously as the engagement between the angled projection (119) of the crimp ring base (115) and the resilient tab (122) of the sleeve (120).

12. An optoelectronic system comprising the active optical cable of any of the preceding claims.

## Patentansprüche

1. Aktives optisches Kabel und optoelektronisches Modul, umfassend:
Ein optoelektronisches Modul (200), umfassend:
Einen Körper, der eine Öffnung des optoelektronischen Moduls definiert;
zwei Arme (250), die innenseitig der Öffnung positioniert sind; und
eine optische Schnittstelle; und
ein aktives optisches Kabel (100), umfassend:
Eine Crimpring-Basis (115), umfassend:
Einen winkligen Vorsprung (119), der auf einer ersten Oberfläche (113) der Crimpring-Basis (115) positioniert ist;
zwei ebenflächige vertiefte Abschnitte (114), die auf beiden Seitenflächen (111) der Crimpring-Basis (115) positioniert sind; und
zumindest eine Verriegelungslasche (116), die auf der jeden Seitenfläche (111) der Crimpring-Basis (115) positioniert ist;
eine Vielzahl von optischen Fasern (160), die innenseitig der Crimpring-Basis (115) positioniert und optisch an die optische Schnittstelle gekoppelt sind; und
eine Hülse (120), welche die Crimpring-Basis (115) umgibt, wobei die Hülse eine nachgiebige Lasche (122) einschließt,
wobei:
Das optoelektronische Modul (200) konfigurierbar ist, in einer verriegelten Position relativ zum optischen Kabel (100) verriegelt zu werden; und
in der verriegelten Position:
Die Verriegelungslaschen (116) weiter in die Öffnung als die Arme (250) positioniert sind, derartig, dass die Arme in den ebenflächigen vertieften Abschnitten (114) positioniert sind;
sich die Hülse (120) in einer Position relativ zur Öffnung befindet, derartig, dass ein Abschnitt der Hülse (120) die Arme (250) in den ebenflächigen vertieften Abschnitten (114) einengt; und
der winklige Vorsprung (119) mit der nachgiebigen Lasche (122) in Eingriff ist, um die Hülse (120) in der Position zu verriegeln, in welcher die Hülse (120) die Arme in den ebenflächigen vertieften Abschnitten (114) einengt.

2. Aktives optisches Kabel nach Anspruch 1, wobei:
Das optische Kabel (100) konfiguriert ist, aus einer entriegelten Position relativ zum optoelektronischen Modul (200) in eine verriegelte Position überzugehen; und
während des Übergangs von der entriegelten Position zur verriegelten Position, die Verriegelungslaschen (116) in die Arme (250), vor oder simultan mit der Kupplung zwischen dem winkligen Vorsprung (119) und der nachgiebigen Lasche (122), eingreifen.

3. Aktives optisches Kabel nach einem der vorhergehenden Ansprüche, wobei der Abschnitt der Hülse (120), der die Arme (250) einengt, eine drängende Kraft bereitstellt, welche die Arme (250) in die vertieften Abschnitte (114) einengt.

4. Aktives optisches Kabel nach einem der vorhergehenden Ansprüche, wobei:
Der winklige Vorsprung (119) umfasst:
Eine winklige Oberfläche, die sich in einem Winkel in Bezug auf die erste Oberfläche (113) der Crimpring-Basis (115) erstreckt; und
eine eingreifende Wand, die sich in einem von im Wesentlichen 90 Grad in Bezug auf die erste Oberfläche (113) erstreckt;
wobei die nachgiebige Lasche (122) eine schräge Oberfläche und eine flache Oberfläche umfasst;
das optische Kabel (100) konfiguriert ist, aus einer entriegelten Position relativ zum optoelektronischen Modul (200) in eine verriegelte Position überzugehen; und
in der Übergangsposition von der entriegelten Position zur verriegelten Position:
Kontaktiert die winklige Oberfläche die schräge Oberfläche, um die nachgiebige Lasche relativ zur ersten Oberfläche in einer ersten Richtung zu versetzen, und
in der verriegelten Position, ist die eingreifende Wand weiter von der Öffnung als die flache Oberfläche positioniert, derartig, dass die flache Oberfläche verhindert, dass sich die Hülse in eine zweite Richtung senkrecht zur ersten Richtung schiebt.

5. Aktives optisches Kabel nach einem der vorhergehenden Ansprüche, wobei:
Die Crimpring-Basis (115) ferner einen Laschenabschnitt (117) umfasst, der auf der Oberseite (113) der Crimpring-Basis positioniert ist;
der Laschenabschnitt (117) umfasst zwei geneigte Abschnitt mit einer dazwischen positionierten erhabenen Oberfläche;
die erhabene Oberfläche ist in Bezug auf die Oberseite (113) der Crimpring-Basis (115) erhaben;
das optoelektronische Modul (200) einen einzigen Aufnahmeabschnitt in einer Innenfläche der Öffnung definiert;
die Hülse (120) definiert ferner einen Innenumfang, um der Hülse zu ermöglichen, sich relativ zur Crimpring-Basis in die positive erste Richtung zu verschieben; und
der Laschenabschnitt (117) geformt ist, in den Aufnahmeabschnitt des optoelektronischen Moduls (200) positioniert zu werden, wenn sich das optische Kabel (100) in der verriegelten Position befindet.

6. Aktives optisches Kabel nach einem der vorhergehenden Ansprüche, wobei ein Innenumfang der Hülse (120) bemessen und geformt ist, die Crimpring-Basis (115) und die optischen Fasern (160) darin aufzunehmen.

7. Aktives optisches Kabel nach einem der vorhergehenden Ansprüche, wobei das optische Kabel (100) konfiguriert ist, aus einer entriegelten Position relativ zum optoelektronischen Modul (200) in die verriegelte Position überzugehen und nicht aus der verriegelten Position in die entriegelte Position überzugehen.

8. Aktives optisches Kabel nach Anspruch 7, wobei:
Jede Verriegelungslasche (116) eine Trennung zwischen zwei separaten ebenflächigen vertieften Abschnitten (114) bildet, die in der Seitenfläche (111) der Crimpring-Basis (115) geformt sind;
die Trennung eine winklige Oberfläche einschließt; und
während des Übergangs aus der entriegelten Position in die verriegelte Position, die winklige Oberfläche die Arme (250) relativ zur Seitenfläche (111) versetzt sowie die Crimpring-Basis (115) in die Öffnung des optoelektronischen Moduls (200) eingeführt wird.

9. Aktives optisches Kabel nach einem der vorhergehenden Ansprüche, das ferner einen MT-Steckverbinder (110) umfasst, der in der Crimpring-Basis (115) untergebracht ist.

10. Aktives optisches Kabel nach einem der vorhergehenden Ansprüche, wobei:
Die Hülse (120) ist zumindest teilweise innenseitig der Öffnung des optoelektronischen Moduls (200) positioniert.

11. Aktives optisches Kabel nach Anspruch 10, wobei die zwei Verriegelungslaschen (116) der Crimpring-Basis (115) in die Arme (250) des optoelektronischen Moduls (200), vor oder simultan als die Kupplung zwischen dem winkligen Vorsprung (119) der Crimpring-Basis (115) und der nachgiebigen Lasche (122) der Hülse (120), eingreifen.

12. Optoelektronisches System, welches das aktive optische Kabel nach einem der vorhergehenden Ansprüche umfasst.

## Revendications

1. Câble optique actif et module optoélectronique comportant :
un module optoélectronique (200) comportant :
un corps définissant un port du module optoélectronique ;
deux bras (250) positionnés à l'intérieur du port ; et
une interface optique ; et
un câble optique actif (100) comportant :
une base formant bague de sertissage (115) comportant :
une partie saillante de biais (119) positionnée sur une première surface (113) de la base formant bague de sertissage (115) ;
deux parties en retrait planes (114) positionnées sur les deux surfaces latérales (111) de la base formant bague de sertissage (115) ; et
au moins une languette de verrouillage (116) positionnée sur ladite chaque surface latérale (111) de la base formant bague de sertissage (115) ;
une pluralité de fibres optiques (160) positionnées à l'intérieur de la base formant bague de sertissage (115) et accouplées optiquement à l'interface optique ; et
un manchon (120) qui entoure la base formant bague de sertissage (115), le manchon comprenant une languette élastique (122),
dans lequel :
le module optoélectronique (200) est en mesure d'être configuré pour être verrouillé dans une position verrouillée par rapport au câble optique (100) ; et
dans la position verrouillée :
les languettes de verrouillage (116) sont positionnées plus loin dans le port par rapport aux bras (250) de telle sorte que les bras sont positionnés dans les parties en retrait planes (114) ;
le manchon (120) est dans une position par rapport au port de telle sorte qu'une partie du manchon (120) renferme les bras (250) dans les parties en retrait planes (114) ; et
la partie saillante de biais (119) est mise en prise avec la languette élastique (122) pour verrouiller le manchon (120) dans la position dans laquelle le manchon (120) renferme les bras dans les parties en retrait planes (114).

2. Câble optique actif selon la revendication 1, dans lequel :
le câble optique (100) est configuré pour passer d'une position déverrouillée par rapport au module optoélectronique (200) à la position verrouillée ; et
au cours du passage de la position déverrouillée à la position verrouillée, les languettes de verrouillage (116) se mettent en prise avec les bras (250) avant ou simultanément avec la mise en prise entre la partie saillante de biais (119) et la languette élastique (122).

3. Câble optique actif selon l'une quelconque des revendications précédentes, dans lequel la partie du manchon (120) qui renferme les bras (250) met en œuvre une force de sollicitation qui renferme les bras (250) dans les parties en retrait (114).

4. Câble optique actif selon l'une quelconque des revendications précédentes, dans lequel :
la partie saillante de biais (119) comporte :
une surface de biais qui s'étend selon un angle par rapport à la première surface (113) de la base formant bague de sertissage (115) ; et
une paroi de mise en prise qui s'étend selon un angle sensiblement de 90 degrés par rapport à la première surface (113) ;
la languette élastique (122) comporte une surface oblique et une surface plate ;
le câble optique (100) est configuré pour passer d'une position déverrouillée par rapport au module optoélectronique (200) à la position verrouillée ; et
dans la position de transition de la position déverrouillée à la position verrouillée :
la surface de biais entre en contact avec la surface oblique pour déplacer la languette élastique par rapport à la première surface dans une première direction, et
dans la position verrouillée, la paroi de mise en prise est positionnée plus loin du port par rapport à la surface plate de telle sorte que la surface plate empêche le manchon de glisser dans une deuxième direction perpendiculaire par rapport à la première direction.

5. Câble optique actif selon l'une quelconque des revendications précédentes, dans lequel :
la base formant bague de sertissage (115) comporte par ailleurs une partie formant languette (117) positionnée sur la surface supérieure (113) de la base formant bague de sertissage ;
la partie formant languette (117) comporte deux parties inclinées avec une surface surélevée positionnée entre elles ;
la surface surélevée est surélevée par rapport à la surface supérieure (113) de la base formant bague de sertissage (115) ;
le module optoélectronique (200) définit une seule partie de réception dans une surface interne du port ;
le manchon (120) définit par ailleurs une circonférence intérieure pour permettre au manchon de translater par rapport à la base formant bague de sertissage dans la première direction positive ; et
la partie languette (117) est d'une forme lui permettant d'être positionnée dans la partie de réception du module optoélectronique (200) quand le câble optique (100) est dans la position verrouillée.

6. Câble optique actif selon l'une quelconque des revendications précédentes, dans lequel une circonférence intérieure du manchon (120) est d'une dimension et d'une forme servant à loger la base formant bague de sertissage (115) et les fibres optiques (160) dans celle-ci.

7. Câble optique actif selon l'une quelconque des revendications précédentes, dans lequel le câble optique (100) est configuré pour passer d'une position déverrouillée par rapport au module optoélectronique (200) à la position verrouillée et pour ne pas passer de la position verrouillée à la position déverrouillée.

8. Câble optique actif selon la revendication 7, dans lequel :
chaque languette de verrouillage (116) forme une cloison entre deux parties en retrait planes séparées (114) formées dans la surface latérale (111) de la base formant bague de sertissage (115) ;
la cloison comprend une surface de biais ; et
au cours du passage de la position déverrouillée à la position verrouillée, la surface de biais déplace les bras (250) par rapport à la surface latérale (111) au fur et à mesure que la base formant bague de sertissage (115) est introduite dans le port du module optoélectronique (200).

9. Câble optique actif selon l'une quelconque des revendications précédentes, comportant par ailleurs une ferrule du type à transfert mécanique (110) logée dans la base formant bague de sertissage (115).

10. Câble optique actif selon l'une quelconque des revendications précédentes, dans lequel :
le manchon (120) est au moins partiellement positionné à l'intérieur du port du module optoélectronique (200).

11. Câble optique actif selon la revendication 10, dans lequel les deux languettes de verrouillage (116) de la base formant bague de sertissage (115) se mettent en prise avec les bras (250) du module optoélectronique (200) avant la mise en prise ou simultanément avec la mise en prise entre la partie saillante de biais (119) de la base formant bague de sertissage (115) et la languette élastique (122) du manchon (120).

12. Système optoélectronique comportant le câble optique actif selon l'une quelconque des revendications précédentes.
